# EUROPEAN PATENT APPLICATION

(11) **EP 4 116 841 A1**
(43) Date of publication of application: **11.01.2023**
(21) Application number: 20923396.4
(22) Date of filing: 03.03.2020
(51) Int. Cl.: G06F 16/90, G06N 5/02, G06N 20/00

(54) **MACHINE LEARNING PROGRAM, MACHINE LEARNING METHOD, AND MACHINE LEARNING DEVICE**

(71) Applicant: FUJITSU LIMITED, Kawasaki-shi, Kanagawa 211-8588 (JP)
(72) Inventor: MURAKAMI, Katsuhiko, Kawasaki-shi, Kanagawa 211-8588 (JP)
(74) Representative: Hoffmann Eitle
(86) International application number: PCT/JP2020/008992
(87) International publication number: WO 2021/176572

(57) **Abstract**

A machine learning program causes a computer to execute processing including classifying a plurality of entities included in a graph structure that indicates a relationship between the plurality of entities, specifying a first entity positioned in a connection portion of the graph structure between a first group and a second group generated according to the classification, and performing machine learning of a machine learning model by inputting first training data that indicates a relationship between the first entity and another entity, among a plurality of pieces of training data that indicates a relationship between the plurality of entities, into the machine learning model in priority to another piece of training data.

## Description

### FIELD

The present invention relates to a machine learning technology.

### BACKGROUND

A knowledge graph embedding technique has been known. For example, in the knowledge graph, knowledge is expressed as a triad, a so-called triple, such as "for s (subject), a value (object) of r (predicate) is o". There is a case where s and o are referred to as entities, and r is referred to as a relation. Transformation for embedding each of the triple elements (s, r, and o) as a vector in a feature space is acquired by performing machine learning. A model generated through machine learning in this way is used for inference such as link prediction for predicting a triple having an unknown relationship, as an example.

### CITATION LIST

### PATENT DOCUMENT

Patent Document 1: Japanese Laid-open Patent Publication No. 2019-125364
Patent Document 2: Japanese National Publication of International Patent Application No. 2016-532942

### SUMMARY

### [TECHNICAL PROBLEM]

However, in the knowledge graph embedding technique described above, even though an effect on convergence of a parameter of a model is not the same between all entities, all the entities are treated in the same way at the time when machine learning is performed. Because this prolongs the convergence of the parameter of the model due to some entities, this causes a processing delay of machine learning.

In one aspect, an object of the present invention is to provide a machine learning program, a machine learning method, and a machine learning device that can realize acceleration of machine learning related to graph embedding.

### [SOLUTION TO PROBLEM]

In one aspect, a machine learning program causes a computer to execute processing including classifying a plurality of entities included in a graph structure that indicates a relationship between the plurality of entities, specifying a first entity positioned in a connection portion of the graph structure between a first group and a second group generated according to the classification, and performing machine learning of a machine learning model by inputting first training data that indicates a relationship between the first entity and another entity, among a plurality of pieces of training data that indicates a relationship between the plurality of entities, into the machine learning model in priority to another piece of training data.

According to an aspect of the embodiments, a machine learning program for causing a computer to execute processing includes classifying a plurality of entities included in a graph structure that indicates a relationship between the plurality of entities; specifying a first entity positioned in a connection portion of the graph structure between a first group and a second group generated according to the classification; and performing machine learning of a machine learning model by inputting first training data that indicates a relationship between the first entity and another entity, among a plurality of pieces of training data that indicates the relationship between the plurality of entities, into the machine learning model in priority to another piece of training data.

### [ADVANTAGEOUS EFFECTS OF INVENTION]

It is possible to realize acceleration of machine learning related to graph embedding.

### BRIEF DESCRIPTION OF DRAWINGS

FIG. 1 is a block diagram illustrating an example of a functional configuration of a server device according to a first embodiment;
FIG. 2 is a diagram illustrating an example of a correlation plot of entities;
FIG. 3 is a diagram illustrating an example of a module;
FIG. 4 is a diagram illustrating another example of the module;
FIG. 5 is a diagram illustrating an example of a model;
FIG. 6 is a flowchart (1) illustrating a procedure of machine learning processing according to the first embodiment;
FIG. 7 is a flowchart (2) illustrating the procedure of the machine learning processing according to the first embodiment; and
FIG. 8 is a diagram illustrating a hardware configuration example of a computer.

### DESCRIPTION OF EMBODIMENTS

Hereinafter, a machine learning program, a machine learning method, and a machine learning device according to the present application will be described with reference to the attached drawings. Note that this embodiment does not limit the disclosed technology. Then, each of the embodiments may be suitably combined without causing contradiction between processing content.

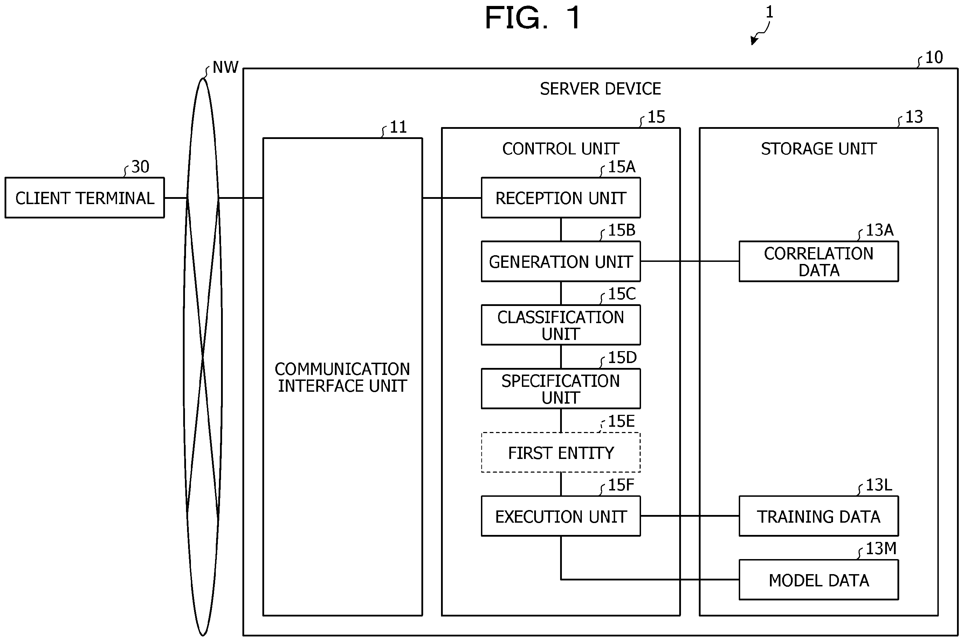

FIG. 1 is a block diagram illustrating an example of a functional configuration of a server device 10 according to a first embodiment. In FIG. 1, a client server system 1 is illustrated merely as an example of a system to which a machine learning service according to the first embodiment is applied. The client server system 1 illustrated in FIG. 1 provides a machine learning service that performs machine learning related to graph embedding as one aspect.

As illustrated in FIG. 1, the client server system 1 may include the server device 10 and a client terminal 30. These server device 10 and client terminal 30 are connected so as to be capable of communicating with each other via a network NW. For example, the network NW may be an optional type of communication network such as the Internet or a local area network (LAN) regardless of whether the network NW is wired or wireless.

The server device 10 is an example of a computer that provides the machine learning service described above. The server device 10 may correspond to an example of a machine learning device. As an embodiment, the server device 10 can be implemented by installing a machine learning program that realizes a function corresponding to the machine learning service described above on an arbitrary computer. For example, the server device 10 can be implemented as a server that provides the machine learning service described above on-premises. In addition, the server device 10 may provide the machine learning service described above as a cloud service by being implemented as a software as a service (SaaS) type application.

The client terminal 30 is an example of a computer that receives the provision of the machine learning service described above. For example, the client terminal 30 corresponds to a desktop type computer such as a personal computer or the like. This is merely an example, and the client terminal 30 may be any computer such as a laptop type computer, a mobile terminal device, or a wearable terminal.

A knowledge graph is given as an example of a graph to be embedded. For example, in the knowledge graph, knowledge is expressed as a triad, a so-called triple, such as "for s (subject), a value (object) of r (predicate) is o". There is a case where s and o are referred to as entities, and r is referred to as a relation. Transformation for embedding each of the triple elements (s, r, and o) as a vector in a feature space is acquired by performing machine learning. A model generated through machine learning in this way can be used for inference such as link prediction for predicting a triple having an unknown relationship, as an example.

As described in the field of background art above, in the knowledge graph embedding technique described above, even though an effect on convergence of a parameter of a model is not the same between all entities, all the entities are treated in the same way at the time when machine learning is performed. Therefore, acceleration of machine learning is limit because the convergence of the model parameter is prolonged due to some entities.

Therefore, the machine learning service according to the present embodiment adopts a problem-solving approach that gives superiority or inferiority to the entities used at the time of performing machine learning as one aspect. Such an approach may be adopted first from a technical point of view such that an effect on the convergence of the model parameter is different according to whether or not an entity is positioned in a connection portion between modules appearing in a network having a graph structure indicating a relationship between the entities.

That is, as described below, it is obtained as various study results that the network described above has a module structure. Merely as an example, modularity is often found in a network investigated with "Stack Overflow". The network may be divided into some modules, and in particular, the module may be referred to as a community in a social network. As another example, as is clear from the following paper 1, in the actual metabolic network, functional modules that can be separately considered in a biochemically collective manner exist. [Paper 1] Ravasz E, Somera AL, Mongru DA, Oltvai ZN, Barabasi AL. "Hierarchical organization of modularity in metabolic networks." Science. 2002 Aug 30;297(5586):1551-5.

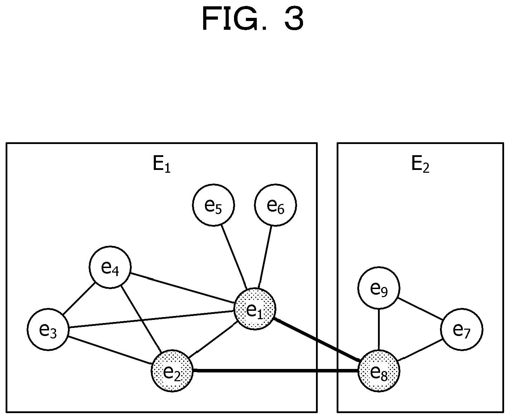

Moreover, in the module that appears in the network, the modularity has an aspect of appearing in a correlation matrix. In FIG. 3 in paper 2 below, an example is illustrated in which an expression correlation of factors (protein = entity) is plotted. [Paper 2] "Combined Metabolomic Analysis of Plasma and Urine Reveals AHBA, Tryptophan and Serotonin Metabolism as Potential Risk Factors in Gestational Diabetes Mellitus (GDM)"

For example, the network described above can be generated from the correlation matrix between the entities. Here, merely as an example, an example will be described where it is assumed that entities of which a correlation coefficient is equal to or more than a predetermined threshold, for example, 0.7 have a relation and a network having a graph structure in which the entity is expressed as a node and the relation is expressed as an edge is generated.

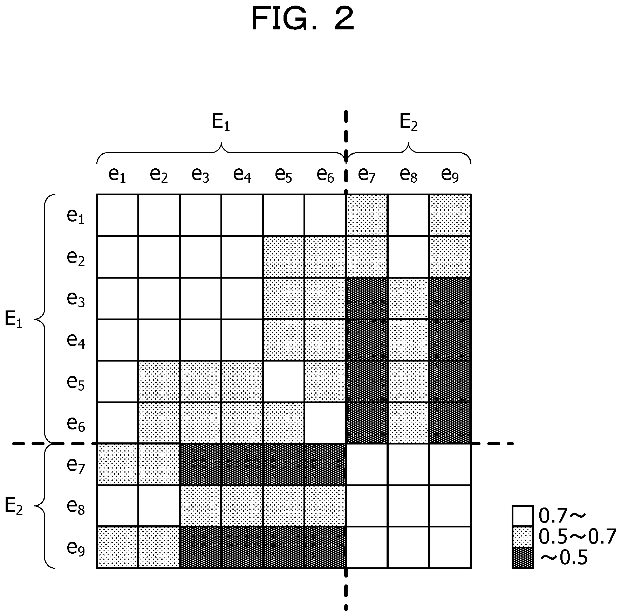

FIG. 2 is a diagram illustrating an example of a correlation plot of entities. In FIG. 2, merely as an example, a correlation coefficient between the entities for each combination of nine entities e₁ to eg is illustrated by hatching distinguished according to the value. For example, in the example illustrated in FIG. 2, a node corresponding to each of the entities e₁ to eg is generated. Moreover, while an edge is generated between nodes corresponding to a pair of entities indicated by white hatching, an edge is not generated between nodes corresponding to a pair of entities indicated by other hatching. As a result, the network (refer to FIG. 3) having the graph structure is generated.

Such a network can be classified into a plurality of modules as described above. Merely as an example, by applying spectral clustering to the node included in the network, the node can be classified into a cluster corresponding to the module.

FIG. 3 is a diagram illustrating an example of the module. In FIG. 3, network data generated from the correlation plot of the entities illustrated in FIG. 2 is illustrated. Moreover, in FIG. 3, two modules, that is, a module_1 and a module_2 are illustrated as a result of clustering on the network data. As illustrated in FIG. 3, as a node classification result on the network data, the module_1 including six entities E₁ including e₁ to e₆ and the module_2 including three entities E₂ including e₇ to eg are obtained. These module_1 and module_2 are independent, that is, intersection of E₁ and E₂ is an empty set.
Entity: eᵢ is an element of E₁(i = 1, ..., 6)module_1
Entity: eⱼ is an element of E₂(j = 7, 8, 9)module_2

In the example illustrated in FIG. 3, the three entities e₈, e₁, and e₂ positioned in the connection portion of the graph structure between the two independent module_1 and module_2 are identified as "mediating entities". On the other hand, the entities e₃ to e₇ and e₉ other than the mediating entities are identified as "in-module entities". Note that the mediating entity corresponds to an example of a first entity.

Under such a condition in which the mediating entities and the in-module entities are identified, training data is distinguished according to whether or not the element s or o of the triple among a plurality of pieces of training data (training data) expressed by the triple (s, r, and o) includes the mediating entity.

For example, while the training data in which the element s or o of the triple includes the mediating entity is identified as "first training data", the training data in which the element s or o of the triple does not include the mediating entity is identified as "another piece of training data".

As an example of such first training data, t₁ (e₈, r, e₁) and t₂ (e₈, r, e₂) are exemplified. When a parameter of a model is updated on the basis of these t₁ and t₂, that is, e₈, e₁, and e₂, this affects almost all the entities E₁ and E₂. Furthermore, although the mediating entities such as e₈, e₁, or e₂ are not included, when the parameter of the model is corrected on the basis of the another piece of the training data including the in-module entities E₁ and E₂, it is needed to correct the parameter of the model on the basis of t₁ and t₂ again accordingly.

From these, even if training (training) based on the entities in the module_1 and the module_2 converges, it is still considered that cost of the triples t₁ and t₂ of the mediating entities does not decrease and the number of necessary times of training is larger than of the in-module entities.

More specifically, since the number of in-module entities is larger than that of the mediating entities, the cost is calculated with a large number of triples for only one epoch. Therefore, an embedded vector that satisfies these triples at the same time is trained. On the other hand, since the number of triples of the mediating entity is less than that of the in-module entity, there are few opportunities for cost calculation in one epoch. From these, there is a high possibility that the triple including the mediating entity takes a long time to converge the parameter of the model or end training at high cost.

From the above, the machine learning service according to the present embodiment prioritizes an execution order of machine learning of the first training data including the mediating entity in the triple or a change rate of the model parameter than other pieces of training data that does not include the mediating entity in the triple.

That is, training regarding a global relationship across the plurality of modules is preceded. This stabilizes expression of an embedded vector of an influencer that affects expression of an embedded vector of another entity in advance. Besides, training regarding a local relationship closed in a single module follows. Entities other than the influencer, for example, the in-module entity is highly independent. Therefore, even if the expression of the embedded vector of the entity of the other module is trained, an effect on the entity of the module is small. Therefore, under a situation in which the expression of the embedded vector of the mediating entity corresponding to the influencer is stable, it is possible to suppress the expression of the embedded vector of the entity of the module to correction at a minor correction level.

Therefore, according to the machine learning service according to the present embodiment, since the convergence of the model parameter can be accelerated, it is possible to accelerate machine learning related to graph embedding.

Next, a functional configuration of the server device 10 according to the present embodiment will be described. In FIG. 1, blocks corresponding to functions of the server device 10 are schematically illustrated. As illustrated in FIG. 1, the server device 10 includes a communication interface unit 11, a storage unit 13, and a control unit 15. Note that FIG. 1 only illustrates an excerpt of functional units related to the machine learning service described above. It is not prevented that a functional unit other than the illustrated ones, for example, a functional unit that is included in an existing computer by default or as an option is provided in the server device 10.

The communication interface unit 11 corresponds to an example of a communication control unit that controls communication with another device, for example, the client terminal 30.

Merely as an example, the communication interface unit 11 is realized by a network interface card such as a LAN card. For example, the communication interface unit 11 receives a request for performing machine learning from the client terminal 30 or outputs the machine learning model generated as a result of machine learning to the client terminal 30.

The storage unit 13 is a functional unit that stores data used for various programs such as the machine learning program described above, including an operating system (OS) executed by the control unit 15.

As an embodiment, the storage unit 13 is realized by an auxiliary storage device of the server device 10. For example, a hard disk drive (HDD), an optical disc, a solid state drive (SSD), or the like corresponds to the auxiliary storage device. Additionally, a flash memory such as an erasable programmable read only memory (EPROM) may correspond to the auxiliary storage device.

As an example of the data used for the program executed by the control unit 15, the storage unit 13 stores correlation data 13A, training data 13L, and model data 13M. In addition to the correlation data 13A, the training data 13L, and the model data 13M, the storage unit 13 can store various types of data such as account information of a user who receives provision of the machine learning service described above, in addition to test data used for a test of a trained model.

The correlation data 13A is data indicating a correlation of entities. Merely as an example, as the correlation data 13A, data associated with a correlation coefficient between the entities for each combination of the entities or the like can be adopted.

The training data 13L is data used for machine learning related to graph embedding. As an example of such training data 13L, the storage unit 13 stores a plurality of pieces of training data expressed by the triple (s, r, o).

The model data 13M is data related to the machine learning model. For example, in a case where the machine learning model is a neural network, the model data 13M may include a parameter of a model such as a weight of each layer or a bias, including a layer structure of a model such as a neuron or a synapses of each layer including an input layer, a hidden layer, and an output layer forming the model. Note that, at a stage before model training is performed, as an example of the parameter of the model, a parameter that is initially set by a random number is stored, while at a stage after the model training is performed, a trained parameter is saved.

The control unit 15 is a processing unit that performs overall control of the server device 10. As one embodiment, the control unit 15 is realized by a hardware processor such as a central processing unit (CPU) or a micro-processing unit (MPU). While the CPU and the MPU are exemplified as an example of the processor here, it may be implemented by any processor regardless of whether it is a versatile type or a specialized type. In addition, the control unit 15 may be realized by hard wired logic such as an application specific integrated circuit (ASIC) or a field programmable gate array (FPGA).

By developing the machine learning program described above in a memory (not illustrated), for example, in a work area of a random access memory (RAM), the control unit 15 virtually realizes the following processing units. As illustrated in FIG. 1, the control unit 15 includes a reception unit 15A, a generation unit 15B, a classification unit 15C, a specification unit 15D, and an execution unit 15F.

The reception unit 15A is a processing unit that receives an execution request of machine learning described above. As an embodiment, the reception unit 15A can receive designation of a set of data used for machine learning described above, for example, the correlation data 13A, the training data 13L, and the model data 13M. As described above, some or all of the datasets used for machine learning do not necessarily need to be data stored in the storage unit 13. For example, the reception unit 15A can receive some or all of the datasets saved in the client terminal 30 or an external device (not illustrated), for example, a file server or the like. Then, the reception unit 15A reads a set of the data designated from the client terminal 30, for example, the correlation data 13A, the training data 13L, and the model data 13M from the storage unit 13 to a predetermined storage region, for example, a work area that can be referred by the control unit 15.

The generation unit 15B is a processing unit that generates a network having a graph structure indicating a relationship between the entities. As an embodiment, the generation unit 15B can be generated from the correlation matrix between the entities included in the correlation data 13A. For example, the generation unit 15B generates the network having the graph structure indicating each entity as a node and indicating a relation as an edge, as assuming that entities of which a correlation coefficient is equal to or more than a predetermined threshold, for example, 0.7 have a relation among the correlation matrices between the entities included in the correlation data 13A. In the example illustrated in FIG. 2, the generation unit 15B generates a node corresponding to each of the entities e₁ to e₉. Moreover, while the generation unit 15B generates an edge between nodes corresponding to a pair of entities indicated by white hatching, the generation unit 15B does not generate an edge between nodes corresponding to a pair of entities indicating other hatching. As a result, as illustrated in FIG. 3, the network having the graph structure is generated.

The classification unit 15C is a processing unit that classifies the node included in the network into a plurality of modules. The "module" here corresponds to an example of a group. As an example, by applying spectral clustering on the node included in the network generated by the generation unit 15B, the classification unit 15C can classify the node into a cluster corresponding to the module. In a case where spectral clustering is applied in this way, the classification unit 15C can use a correlation coefficient between entities corresponding to nodes at both ends of an edge, as a similarity, to set a weight given to each edge included in the network. For example, in a case where the node corresponding to each of the entities e₁ to eg included in the network illustrated in FIG. 3 is clustered, the module_1 including the six entities E₁ including e₁ to e₆ and the module_2 including the three entities E₂ including e₇ to eg are obtained. These module_1 and module_2 are independent, that is, intersection of E₁ and E₂ is an empty set.

Note that, here, a case is illustrated where each entity is independent between the two modules. However, each entity does not necessarily need to be completely independent. For example, in a case where conditions intersection of E₁ and E₂ is Es, but |E_{S}| < < |E₁| and |E_{S}| < < |E₂| are satisfied, the existence of the entity E_{S} overlapping between the two modules may be recognized.

The specification unit 15D is a processing unit that specifies the first entity positioned in the connection portion of the graph structure between the modules. The "module" here corresponds to an example of a group. As an embodiment, the specification unit 15D searches for an edge connecting between the modules that are generated according to the classification of the clustering by the classification unit 15C, from the network generated by the generation unit 15B. The entities corresponding to the nodes at both ends of the edge hit in such a search are specified as the mediating entities. For example, in the example illustrated in FIG. 3, edges connecting the two independent module_1 and module_2, that is, edges indicated by thick lines in FIG. 3 are hit in the search. The three entities e₈, e₁, and e₂ corresponding to the nodes at both ends of the edges hit in the search in this way are identified as the mediating entities.

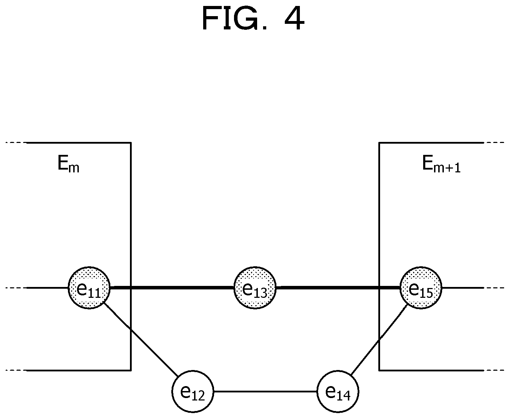

Here, the plurality of modules is not necessarily connected by one edge. FIG. 4 is a diagram illustrating another example of the module. In FIG. 4, a module_m including an entity Eₘ and a module_m + 1 including an entity E_{m + 1} are illustrated as a result of clustering on the network data, together with network data different from the example in FIG. 3. In the example illustrated in FIG. 4, because the two module_m and module_m + 1 are not connected with a single edge, it is difficult to extract the mediating entity.

In preparation for such a case, an upper limit of the number of concatenations of the edges for connecting between the modules at the time of searching for the edge can be set as a search condition. For example, when the upper limit of the number of concatenations is set to "2", edges for connecting the two module_m and module_m + 1 with two concatenations, that is, two edges indicated by thick lines in FIG. 4 are hit in the search. As a result, three entities e₁₁, e₁₃, and e₁₅ corresponding to the nodes at both ends of the edges are identified as the mediating entities. On the other hand, an edge connecting the two module_m and module_m + 1 with three concatenations is not hit in the search.

Note that, here, an example has been described where the upper limit of the number of concatenations of the edges for connecting between the modules is set. However, it is possible to increment the number of concatenations and search for the edge connecting between the modules, when an initial value of the number of concatenations is set to "0" and until a predetermined number of mediating entities are obtained or the number of concatenations reaches the upper limit.

As described above, the mediating entity specified by the specification unit 15D is saved in the storage region that can be referred by the execution unit 15F, as a first entity 15E.

The execution unit 15F is a processing unit that performs machine learning. As an embodiment, the execution unit 15F prioritizes an execution order of machine learning of the first training data including the mediating entity in the triple or a change rate of the model parameter than other pieces of training data that does not include the mediating entity in the triple.

Hereinafter, merely as an example, an example will be described where the execution order of machine learning of the first training data is prioritized. In this case, the execution unit 15F extracts the first training data including the mediating entity specified by the specification unit 15D, from among the training data included in the training data 13L. Besides, the execution unit 15F repeats the following processing for the number of times corresponding to the number of pieces of first training data for each epoch until a predetermined end condition is satisfied. In other words, the execution unit 15F inputs the first training data into a model developed on the work area (not illustrated) according to the model data 13M. As a result, a score Φ of a triple of the first training data is output from the model.

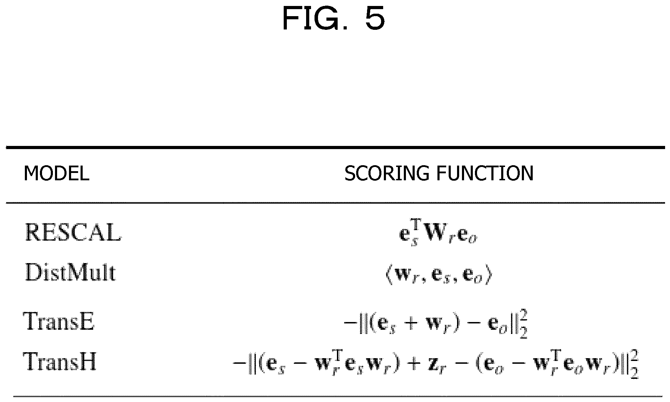

Here, various models illustrated in FIG. 5 can be used as the model of graph embedding. FIG. 5 is a diagram illustrating an example of a model. All of the examples of the model illustrated in FIG. 5 are designed so that a calculation value of a scoring function Φ for a "true" triple is higher than a calculation value of a scoring function Φ for a "false" triple. In the two models from the above, Φ may take any real number. On the other hand, because Φ is always negative in the two models from the bottom, the two models are models in which it is assumed that the calculation value of the scoring function Φ for the "true" triple is close to "0" and the calculation value of the scoring function Φ for the "false" triple is a negative value far from "0". The models illustrated in FIG. 5 are, for example, RESCAL described in paper 3, DistMult described in paper 4, TransE described in paper 5, and TransH described in paper 6.

### [Paper 3]

Maximilian Nickel, Volker Tresp, and Hans-Peter Kriegel. 2011. A three-way model for collective learning on multi-relational data. In Proceedings of the 28th International Conference on Machine Learning. pages 809-816

### [Paper 4]

Bishan Yang, Wen-tau Yih, Xiaodong He, Jianfeng Gao, and Li Deng. 2015. Embedding entities and relations for learning and inference in knowledge bases. The 3rd International Conference on Learning Representations.

### [Paper 5]

Antoine Bordes, Nicolas Usunier, Alberto Garcia-Duran, Jason Weston, and Oksana Yakhnenko. 2013. Translating embeddings for modeling multi-relational data. In Advances in Neural Information Processing Systems. pages 2787-2795

### [Paper 6]

Zhen Wang, Jianwen Zhang, Jianlin Feng, and Zheng Chen. 2014. Knowledge graph embedding by trans-lating on hyperplanes. In The Twentyeighth AAAI Conference on Artificial Intelligence. pages 1112-1119.

Thereafter, in a case where the score Φ of the triple is obtained for each piece of the first training data, the execution unit 15F updates the parameter of the model. Merely as an example, in a case where "TransE" of the models illustrated in FIG. 5 is used, a cost can be calculated by summing the scores Φ of all the triples. On the basis of the cost calculated in this way, the execution unit 15F performs calculation of a parameter such as optimization of a log likelihood. Besides, the execution unit 15F updates the parameter of the model included in the model data 13M to the parameter obtained through calculation. Note that the update of the parameter of the model is repeated until the predetermined end condition is satisfied. For example, as an example of the end condition described above, a specified number of epochs, for example, 1000 times can be set. As another example, to make a change rate obtained from a difference between amounts of n-th and n + 1-th parameter updates and a difference between amounts of the n + 1-th and n + 2-th parameter updates be less than a predetermined threshold ε, that is, the convergence of the parameter can be set as the end condition described above.

In this case, after machine learning of the first training data ends, the execution unit 15F extracts another piece of the training data that does not include the mediating entity specified by the specification unit 15D, from among the training data included in the training data 13L. Besides, the execution unit 15F repeats the following processing for the number of times corresponding to the number of the other pieces of the training data for each epoch until a predetermined end condition is satisfied. In other words, the execution unit 15F inputs the another piece of the training data into the model developed on the work area (not illustrated) according to the model data 13M after machine learning of the first training data ends. As a result, a score Φ of a triple of the another piece of the training data is output from the model.

Thereafter, in a case where the score Φ of the triple is obtained for each piece of the another training data, the execution unit 15F updates the parameter of the model. Merely as an example, in a case where "TransE" of the models illustrated in FIG. 5 is used, a cost can be calculated by summing the scores Φ of all the triples. On the basis of the cost calculated in this way, the execution unit 15F performs calculation of a parameter such as optimization of a log likelihood. Besides, the execution unit 15F updates the parameter of the model included in the model data 13M to the parameter obtained through calculation. Note that the update of the parameter of the model is repeated until the end condition described above is satisfied.

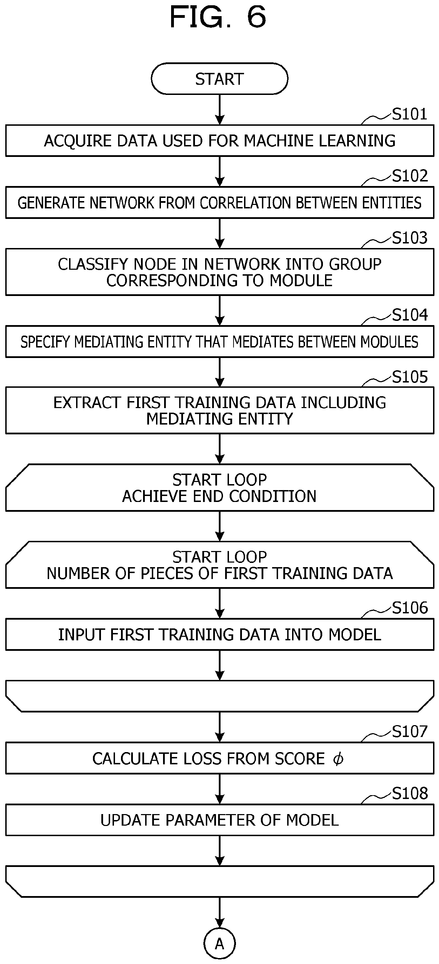

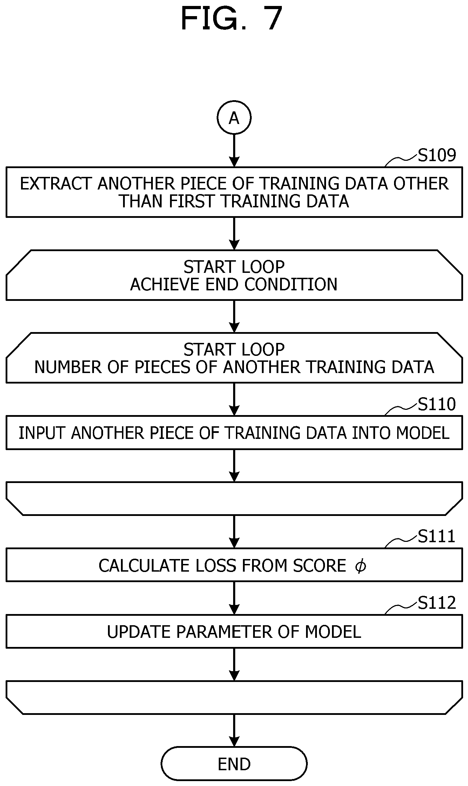

FIGs. 6 and 7 are flowcharts (1) and (2) illustrating a procedure of machine learning processing according to the first embodiment. As an example, this processing can be started in a case where an execution request of machine learning is received from the client terminal 30 or the like.

As illustrated in FIG. 6, the reception unit 15A acquires a set of data designated at the time of the execution request of machine learning described above, for example, the correlation data 13A, the training data 13L, and the model data 13M from the storage unit 13 (step S101).

Subsequently, the generation unit 15B generates the network having the graph structure indicating the relationship between the entities on the basis of the correlation matrix between the entities included in the correlation data 13A (step S102).

Then, by applying spectral clustering on the node included in the network generated in step S102, the classification unit 15C classifies the node into the cluster corresponding to the module (step S103).

Subsequently, the specification unit 15D specifies the mediating entity positioned in the connection portion of the graph structure between the modules generated according to the classification of the clustering in step S103, from the network generated in step S102 (step S104).

Thereafter, the execution unit 15F extracts the first training data including the mediating entity specified in step S104, from among the training data included in the training data 13L (step S105). Besides, the execution unit 15F repeats the processing from step S106 to step S108 below until a predetermined end condition is satisfied. Moreover, the execution unit 15F repeats the processing in step S106 below for the number of times corresponding to the number of pieces of the first training data for each epoch.

In other words, the execution unit 15F inputs the first training data into the model developed on the work area (not illustrated) according to the model data 13M (step S106). As a result, a score Φ of a triple of the first training data is output from the model.

Thereafter, in a case where the score Φ of the triple is obtained for each piece of the first training data, the execution unit 15F calculates a cost on the basis of the scores Φ of all the triples (step S107). On the basis of the cost calculated in this way, after executing the calculation of the parameter such as the optimization of the log likelihood, the execution unit 15F updates the parameter of the model included in the model data 13M to a parameter obtained through calculation (step S108).

Then, by executing steps S106 to S108 described above until a predetermined end condition is satisfied, after machine learning of the first training data ends, the execution unit 15F executes following processing. In other words, as illustrated in FIG. 7, the execution unit 15F extracts another piece of training data that does not include the mediating entity specified in step S104 from among the training data included in the training data 13L (step S109).

Besides, the execution unit 15F repeats the processing from step S110 to step S112 below until a predetermined end condition is satisfied. Moreover, the execution unit 15F repeats the processing in step S110 below for the number of times corresponding to the number of pieces of the another training data for each epoch.

In other words, the execution unit 15F inputs the another piece of training data into the model developed on the work area (not illustrated) according to the model data 13M after machine learning of the first training data ends (step S110). As a result, a score Φ of a triple of the another piece of the training data is output from the model.

Then, in a case where the score Φ of the triple is obtained for each piece of the another training data, the execution unit 15F calculates a cost on the basis of the scores Φ of all the triples (step S111). On the basis of the cost calculated in this way, after executing the calculation of the parameter such as the optimization of the log likelihood, the execution unit 15F updates the parameter of the model included in the model data 13M to a parameter obtained through calculation (step S112).

Thereafter, after repeatedly executing step S110 to step S112 described above until the predetermined end condition is satisfied, machine learning of the another piece of the training data ends, and the entire processing ends.

As described above, the machine learning service according to the present embodiment prioritizes machine learning of the training data including the mediating entity positioned in the connection portion between the modules that appear in the network with the graph structure indicating the relationship between the entities in the triple than machine learning of the another piece of the training data. Therefore, according to the machine learning service according to the present embodiment, since the convergence of the model parameter can be accelerated, it is possible to accelerate machine learning related to graph embedding.

While the embodiment relating to the disclosed device has been described above, the present invention may be carried out in a variety of different modes in addition to the embodiment described above. Thus, hereinafter, another embodiment included in the present invention will be described.

In the first embodiment described above, as an example, an example has been described where the execution order of machine learning of the first training data is prioritized. However, the present invention is not limited to this. For example, the execution unit 15F can collectively perform machine learning of the first training data and the another piece of the training data. In this case, when updating the parameter using the first training data that includes the mediating entity in the triple, it is sufficient for the execution unit 15F to largely change the change rate of the parameter than a case where the parameter is updated using the another piece of the training data that does not include the mediating entity in the triple.

In the first embodiment described above, merely as an example, an example has been described where the network data is generated using the correlation data 13A that is prepared separately from the training data 13L. However, the correlation data can be generated from the training data 13L. For example, in a case where a triple including a pair of entities corresponding to each combination of the entities included in the training data 13L as s and o exists in the training data 13L, that is, in a case where a relation of the combination exists, the correlation coefficient is set to "1". On the other hand, in a case where the triple including the pair of the entities corresponding to the combination as s and o does not exist in the training data 13L, that is, in a case where the relation of the combination does not exist, the correlation coefficient is set to "0". As a result, it is possible to generate the correlation data.

In the first embodiment described above, as an example of the graph structure of the network, an undirected graph is described. However, the machine learning processing illustrated in FIGs. 6 and 7 can be applied to a directed graph. For example, in a case where a plurality of types of relations exists in triple data, a structure of a network generated for each type of the relation, and in addition, a structure of a module classified according to the type of the relation does not match between the relations.

As an example, while the server device 10 generates the edge between the nodes corresponding to the combination in a case where at least one relation of all the types of relations exists for each combination of the entities, the server device 10 prohibits the edge between the nodes corresponding to the combination in a case where any one of all the types of relations does not exist. The mediating entity can be specified from the obtained module by clustering the node included in the network generated in this way.

As another example, the server device 10 generates the network for each type of the relation and performs clustering on the network for each type of the relation. Besides, the server device 10 can specify the mediating entity on the basis of the module obtained as a clustering result of a relation having the highest modularity from among the results of clustering for each type of the relation. In this case, the server device 10 can evaluate a degree of the modularity of each relation according to Newman Modularity or the like.

In the first embodiment described above, an example has been described where machine learning of the another piece of the training data is performed in order for the number of pieces of the another training data. However, the present invention is not limited to this. As described above, the another piece of the training data includes only the in-module entities, and the in-module entity has a sufficiently smaller effect on the expression of the vector of the entity in the different module than the mediating entity. For example, the another piece of the training data may include second training data indicating a relationship between entities in a first group and third training data indicating a relationship between entities in a second group. From this, the execution unit 15F performs machine learning of the machine learning model by inputting the second training data and the third training data into the machine learning model in parallel. For example, in the example in FIG. 3, when it is assumed that the module_1 correspond to the first group and the module_2 correspond to the second group, the second training data corresponds to a triple indicating a relationship between the entities e₃ to e₆, excluding the mediating entities e₈, e₁, and e₂. Furthermore, the third training data corresponds to a triple indicating a relationship between the entities e₇ and e₉, excluding the mediating entities e₈, e₁, and e₂. The second training data and the third training data are input into the machine learning model in parallel. As a result, machine learning related to graph embedding can be further accelerated.

Furthermore, individual components of each of the illustrated devices are not necessarily physically configured as illustrated in the drawings. In other words, specific modes of distribution and integration of the individual devices are not restricted to those illustrated, and all or some of the devices may be configured by being functionally or physically distributed and integrated in any unit depending on various loads, usage status, and the like. For example, the reception unit 15A, the generation unit 15B, the classification unit 15C, the specification unit 15D, or the execution unit 15F may be connected via a network as the external device of the server device 10. Furthermore, each of the reception unit 15A, the generation unit 15B, the classification unit 15C, the specification unit 15D, or the execution unit 15F is included in another device, connected to the network, and collaborates together so that the functions of the server device 10 described above may be realized.

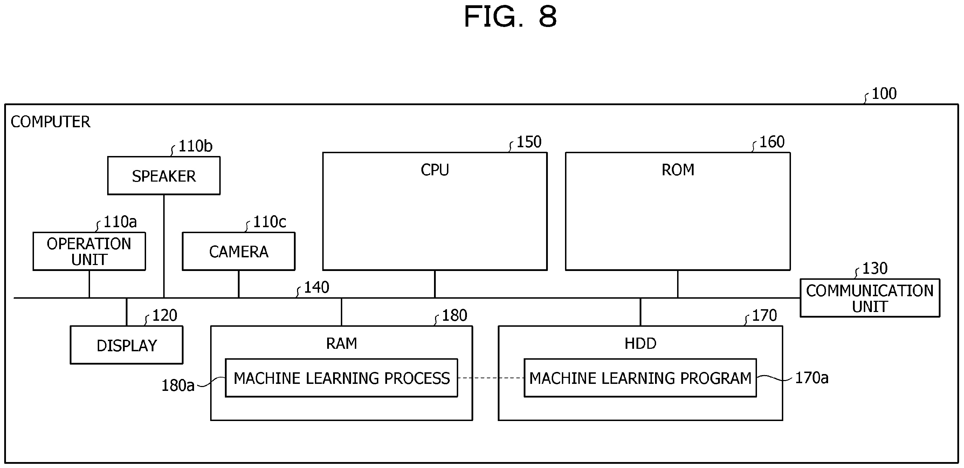

In addition, various types of processing described in the embodiment above may be realized by executing a program prepared in advance by a computer such as a personal computer or a workstation. Therefore, hereinafter, an example of a computer that executes the machine learning program that has a function similar to the first embodiment described above and the present embodiment will be described with reference to FIG. 8.

FIG. 8 is a diagram illustrating a hardware configuration example of a computer. As illustrated in FIG. 8, a computer 100 includes an operation unit 110a, a speaker 110b, a camera 110c, a display 120, and a communication unit 130. Moreover, the computer 100 includes a CPU 150, a read-only memory (ROM) 160, an HDD 170, and a RAM 180. These units 110 to 180 are each connected via a bus 140.

As illustrated in FIG. 8, the HDD 170 stores a machine learning program 170a that has functions similar to the reception unit 15A, the generation unit 15B, the classification unit 15C, the specification unit 15D, and the execution unit 15F described in the above first embodiment. This machine learning program 170a may be integrated or separated similarly to each component of the reception unit 15A, the generation unit 15B, the classification unit 15C, the specification unit 15D, and the execution unit 15F illustrated in FIG. 1. In other words, all the data indicated in the first embodiment described above does not necessarily have to be stored in the HDD 170, and it is sufficient that only data used for processing be stored in the HDD 170.

Under such an environment, the CPU 150 reads the machine learning program 170a from the HDD 170 and then loads the machine learning program 170a into the RAM 180. As a result, the machine learning program 170a functions as a machine learning process 180a as illustrated in FIG. 8. This machine learning process 180a loads various types of data read from the HDD 170 into a region allocated to the machine learning process 180a in a storage region included in the RAM 180 and executes various types of processing using the various types of loaded data. For example, as an example of the processing executed by the machine learning process 180a, the processing illustrated in FIGs. 6 and 7 or the like is included. Note that all the processing units indicated in the first embodiment described above do not necessarily have to run on the CPU 150, and it is sufficient when only a processing unit corresponding to processing to be executed be virtually realized.

Note that the machine learning program 170a described above does not necessarily have to be stored in the HDD 170 or the ROM 160 from the beginning. For example, the machine learning program 170a is stored in a "portable physical medium" such as a flexible disk, which is what is called an FD, a compact disc (CD)-ROM, a digital versatile disk (DVD), a magneto-optical disk, or an integrated circuit (IC) card to be inserted in the computer 100. Then, the computer 100 may obtain and execute the machine learning program 170a from those portable physical media. Furthermore, the machine learning program 170a may be stored in another computer, a server device, or the like connected to the computer 100 via a public line, the Internet, a local area network (LAN), a wide area network (WAN), or the like, and the computer 100 may obtain and execute the machine learning program 170a from them.

### REFERENCE SIGNS LIST

10 server device
11 communication interface unit
13 storage unit
13A correlation data
13L training data
13M model data
15 control unit
15A reception unit
15B generation unit
15C classification unit
15D specification unit
15F execution unit
30 client terminal

## Claims

1. A machine learning program for causing a computer to execute processing comprising:
classifying a plurality of entities included in a graph structure that indicates a relationship between the plurality of entities;
specifying a first entity positioned in a connection portion of the graph structure between a first group and a second group generated according to the classification; and
performing machine learning of a machine learning model by inputting first training data that indicates a relationship between the first entity and another entity, among a plurality of pieces of training data that indicates the relationship between the plurality of entities, into the machine learning model in priority to another piece of training data.

2. The machine learning program according to claim 1, for causing the computer to execute processing further comprising
generating the graph structure from a correlation matrix between the plurality of entities, wherein
the classifying processing includes processing for classifying the plurality of entities included in the graph structure generated from the correlation matrix between the plurality of entities.

3. The machine learning program according to claim 2, wherein
the correlation matrix between the plurality of entities is generated on the basis of the relationship between the plurality of entities indicated by the plurality of pieces of training data.

4. The machine learning program according to claim 1, wherein
the specifying processing includes processing for specifying, as the first entity, an entity that corresponds to a node at each of both ends of an edge that connects the first group and the second group with the number of concatenations within a predetermined upper limit value.

5. The machine learning program according to claim 1, wherein
the classifying processing is executed on the basis of any one of a plurality of types of relationships between the plurality of entities.

6. The machine learning program according to claim 1, wherein
the classifying processing includes processing for classifying the plurality of entities included in the graph structure according to the type of the relationship, and
the specifying processing is executed on the basis of a classification result of a group that has highest modularity among classification results of groups generated for the respective types of the relationships.

7. The machine learning program according to claim 1, wherein
the another piece of training data includes second training data that indicates a relationship between entities in the first group and third training data that indicates a relationship between entities in the second group, and
the executing processing includes processing for performing machine learning of the machine learning model by inputting the second training data and the third training data into the machine learning model in parallel.

8. A machine learning method for a computer to execute a process comprising:
classifying a plurality of entities included in a graph structure that indicates a relationship between the plurality of entities;
specifying a first entity positioned in a connection portion of the graph structure between a first group and a second group generated according to the classification; and
performing machine learning of a machine learning model by inputting first training data that indicates a relationship between the first entity and another entity, among a plurality of pieces of training data that indicates the relationship between the plurality of entities, into the machine learning model in priority to another piece of training data.

9. The machine learning method according to claim 8, wherein the process includes
generating the graph structure from a correlation matrix between the plurality of entities, wherein
the classifying processing includes processing for classifying the plurality of entities included in the graph structure generated from the correlation matrix between the plurality of entities.

10. The machine learning method according to claim 9, wherein
the correlation matrix between the plurality of entities is generated on the basis of the relationship between the plurality of entities indicated by the plurality of pieces of training data.

11. The machine learning method according to claim 8, wherein
the specifying processing includes processing for specifying, as the first entity, an entity that corresponds to a node at each of both ends of an edge that connects the first group and the second group with the number of concatenations within a predetermined upper limit value.

12. The machine learning method according to claim 8, wherein
the classifying processing is executed on the basis of any one of a plurality of types of relationships between the plurality of entities.

13. The machine learning method according to claim 8, wherein
the classifying processing includes processing for classifying the plurality of entities included in the graph structure according to the type of the relationship, and
the specifying processing is executed on the basis of a classification result of a group that has highest modularity among classification results of groups generated for the respective types of the relationships.

14. The machine learning method according to claim 8, wherein
the another piece of training data includes second training data that indicates a relationship between entities in the first group and third training data that indicates a relationship between entities in the second group, and
the executing processing includes processing for performing machine learning of the machine learning model by inputting the second training data and the third training data into the machine learning model in parallel.

15. A machine learning device comprising
a control unit configured to:
classify a plurality of entities included in a graph structure that indicates a relationship between the plurality of entities,
specify a first entity positioned in a connection portion of the graph structure between a first group and a second group generated according to the classification, and
perform machine learning of a machine learning model by inputting first training data that indicates a relationship between the first entity and another entity, among a plurality of pieces of training data that indicates the relationship between the plurality of entities, into the machine learning model in priority to another piece of training data.

16. The machine learning device according to claim 15, wherein the control unit execute processing further comprising
generating the graph structure from a correlation matrix between the plurality of entities, wherein
the classifying processing includes processing for classifying the plurality of entities included in the graph structure generated from the correlation matrix between the plurality of entities.

17. The machine learning device according to claim 16, wherein
the correlation matrix between the plurality of entities is generated on the basis of the relationship between the plurality of entities indicated by the plurality of pieces of training data.

18. The machine learning device according to claim 15, wherein
the specifying processing includes processing for specifying, as the first entity, an entity that corresponds to a node at each of both ends of an edge that connects the first group and the second group with the number of concatenations within a predetermined upper limit value.

19. The machine learning device according to claim 15, wherein
the classifying processing is executed on the basis of any one of a plurality of types of relationships between the plurality of entities.

20. The machine learning device according to claim 15, wherein
the classifying processing includes processing for classifying the plurality of entities included in the graph structure according to the type of the relationship, and
the specifying processing is executed on the basis of a classification result of a group that has highest modularity among classification results of groups generated for the respective types of the relationships.
